# EUROPEAN PATENT SPECIFICATION

(11) **EP 3 227 660 B1**
(45) Date of publication and mention of the grant of the patent: **05.09.2018**
(21) Application number: 15817502.6
(22) Date of filing: 02.12.2015
(51) Int. Cl.: G01N 3/20, G01N 3/08

(54) **TESTING THE BENDING BEHAVIOUR OF RIGID PIPES**
PRÜFUNG DES BIEGEVERHALTENS VON STARREN ROHREN
TEST DU COMPORTEMENT DE CINTRAGE DE TUYAUX RIGIDES

(30) Priority: 05.12.2014 GB 201421687
(43) Date of publication of application: 11.10.2017
(73) Proprietor: Subsea 7 Limited, Sutton, Surrey SM2 5BN (GB)
(72) Inventor: COX, Norman, Aberdeen AB15 4BH (GB)
(74) Representative: Callaghan, Mark Peter
(86) International application number: PCT/GB2015/053682
(87) International publication number: WO 2016/087851

(56) References cited:
- EP-A2- 2 546 630
- GB-A- 764 348
- US-A- 5 042 282

## Description

This invention relates to testing the bending behaviour of rigid pipes for reel-lay operations, as are commonly used by the oil and gas industry when laying subsea pipelines.

Reel-lay operations of relevance to the present invention involve winding or spooling a rigid pipeline onto a reel of a pipelaying vessel, to be unwound or unspooled from the reel during subsequent pipelaying at sea. When spooling, bending of the pipeline extends beyond elastic limits into plastic deformation. That plastic deformation must be recovered by subsequent straightening processes during unspooling when laying.

It is important to understand that in the subsea oil and gas industry, the terms 'flexible' and 'rigid' as applied to pipes have clear meanings that differ in important respects from general language. For example, nominally 'rigid' pipes have enough flexibility to be bent if a minimum bend radius is observed. Yet, such pipes are not regarded in the industry as being 'flexible'.

Flexible pipes used in the subsea oil and gas industry are specified in API (American Petroleum Institute) Specification 17J and API Recommended Practice 17B. The pipe body is composed of a composite structure of layered materials, in which each layer has its own function. Typically, polymer tubes and wraps ensure fluid-tightness and thermal insulation. Conversely, steel layers or elements provide mechanical strength; for example, interlocked steel tapes form a carcass or pressure vault and a tensile armour is formed of helically-wound wire. Flexible pipes are terminated and assembled by end fittings.

The structure of a flexible pipe allows a large bending deflection without a similarly large increase in bending stresses. The bending limit of the composite structure is determined by the elastic limit of the outermost plastics layer of the structure, typically the outer sheath, which limit is typically 6% to 7% bending strain. Exceeding that limit causes irreversible damage to the structure. Consequently, the minimum bending radius or MBR of flexible pipe used in the subsea oil and gas industry is typically between 3 and 6 metres. CN 203629976 describes a method of testing the bending stiffness of a flexible pipe.

Conversely, rigid pipes used in the subsea oil and gas industry are specified in API Specification 5L and Recommended Practice 1111. In contrast to flexible pipes, a rigid pipe usually consists of or comprises at least one pipe of solid steel or steel alloy. However, additional layers of materials can be added, such as an internal liner layer or an outer coating layer. Such additional layers can comprise polymer, metal or composite materials. Rigid pipes are typically terminated by a bevel or a thread, and are assembled end-to-end by welding or screwing them together.

The allowable in-service deflection of rigid steel pipe is determined by the elastic limit of steel, which is around 1% bending strain. Exceeding this limit caused plastic deformation of the steel. It follows that the MBR of rigid pipe used in the subsea oil and gas industry is typically around 100 to 300 metres. However, slight plastic deformation can be recovered or rectified by mechanical means, such as straightening. Thus, during reel-lay installation of a rigid pipeline made up of welded rigid pipes, the rigid pipeline can be spooled on a reel with a typical radius of between 8 and 10 metres. This implies a bending strain above 2% for conventional diameters of rigid pipes, requiring the pipe to be straightened mechanically upon unspooling.

In practice, assembly and spooling of a reel-lay pipeline usually takes place at a shore-based spoolbase that a pipelaying vessel visits when necessary for loading. However, it is also possible for a pipeline to be spooled onto an intermediate storage reel after assembly at a spoolbase, to be unspooled subsequently from the storage reel and simultaneously spooled onto a reel of a pipelaying vessel.

Assembling a pipeline for reel-lay operations typically involves welding together short steel pipe joints at a spoolbase to fabricate much longer straight pipe stalks. The pipe joints have external coatings for corrosion protection, which coatings often comprise various layers to add thermal insulation. Some pipe joints are also lined internally for carrying corrosive fluids. A lined pipe typically comprises a load-bearing, thick-walled, high-strength outer pipe of low-alloy carbon steel, lined with a thin-walled liner sleeve of a corrosion-resistant alloy. Plastics liner sleeves are also known. The outer pipe resists buckling during spooling and unspooling and resists hydrostatic pressure when underwater. Conversely, the inner sleeve contributes little mechanical strength but it protects the stronger outer pipe from corrosive fluids carried by the pipeline in use.

The welds between pipe joints are tested and coated with field joint coatings that insulate and protect the weld region against corrosion. Then, the resulting pipe stalks are stored beside each other at the spoolbase. When a pipelaying vessel or an intermediate storage reel is ready to be loaded, the pipe stalks are welded together successively end-to-end to create a continuous length of pipeline while the pipeline is being spooled onto the reel of the vessel or onto the intermediate storage reel as the case may be. Again, field joint coatings are applied to the welds between successive pipe stalks before spooling.

A pipeline may comprise other components in addition to the main pipe and its optional coatings or linings. For example, a double-walled pipe-in-pipe arrangement may be adopted for additional thermal insulation. A pipeline may also comprise parallel elements, for example in a piggy-backed or nested arrangement, such as umbilicals carrying service fluids, heating cables, power cables or fibre-optic cables for carrying data.

All components of a pipeline, including any coatings and linings, may significantly modify its bending behaviour. Indeed, the main pipe and its coatings, linings and any other components may all be expected to respond differently to bending forces and to interact with each other in complex ways during bending. In such cases, the bending behaviour of a practical multi-component pipeline is not as predictable or as well understood as the bending behaviour of a notional plain steel pipe. For example, bending deformation of a pipeline upon spooling develops considerable stresses and strains in the pipe wall, including ovalisation in transverse cross-section. Consequently, particular problems may arise when bending lined pipelines, such as wrinkling of the liner in mechanically-bonded lined pipe joints.

In view of these challenges, it is necessary to perform tests to assess and model the bending behaviour of a pipeline and its various components before such a pipeline can be spooled onto a reel for commercial pipe-laying operations. Such tests involve bending a sample length of pipeline in a manner that is as representative as possible of spooling such a pipeline onto a reel.

In this specification, references to bending may also, where the context requires, include straightening a bent pipe. Straightening may be regarded as reverse bending.

Conventional bending rigs perform simple bending: the ends of a pipe are held in jaws and jacks pivot the jaws to bend the pipe. An example is shown in JP 59-38633, where jaws are carried by respective wheels that turn the jaws in opposite angular directions to deflect the pipe ends and so to bend the pipe. However, simple bending is not representative of spooling because it does not simulate local surface effects. Ovalisation is also a significant factor that needs to be simulated but it is ignored by a simple bending rig such as that disclosed in JP 59-38633.

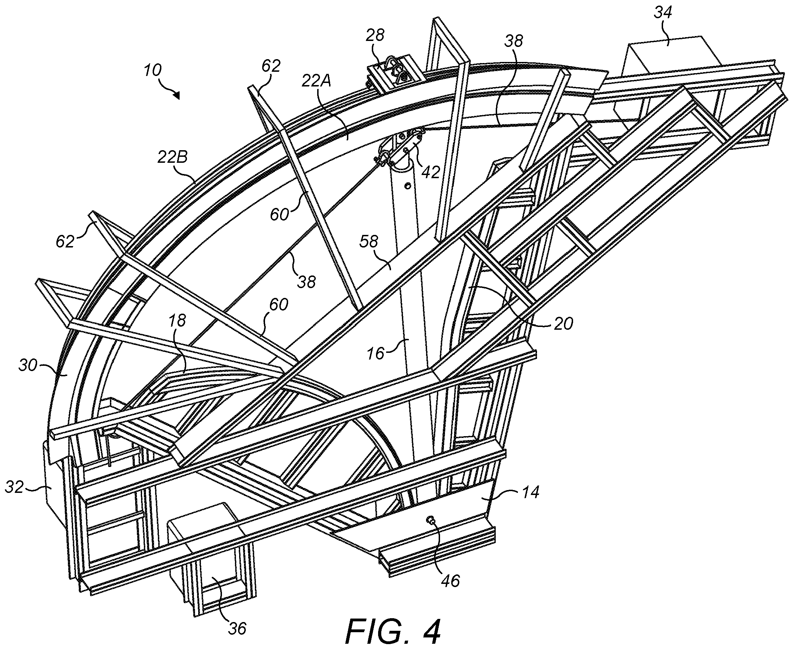

An improvement is to bend a pipe about a part-circular former that simulates a reel acting as an external mandrel. An example of this approach is shown in Figure 4 of the paper OTC-23096-PP *Mechanically Lined Pipe: Installation by Reel-Lay* presented to the 2012 Offshore Technology Conference by G.A. Toguyeni and J. Banse. Here, one end of the pipe is fixedly held by a jaw while the other end of the pipe is displaced by a winch or a crane so that the pipe bends progressively around the former. Whilst this better simulates local surface effects and ovalisation, it cannot simulate the effect of substantial longitudinal tension extending along a pipe string.

Longitudinal tension in the pipe string is a significant factor during actual spooling, caused by rotation of the reel acting against back-tension of the pipe string being assembled at the spoolbase. The interaction or coupling of such tension and bending is well understood for plain steel pipe, but is not sufficiently understood for other components such as polymer coatings. Consequently, unexpected cracks can appear during a test or indeed during pipeline spooling if a preliminary test was not sufficiently representative.

EP 2546630 proposes another pipe-bending approach, which in that case imparts longitudinal tension in the pipe. Specifically, the pipe is tensioned between a jack and a clamp mounted on a rotating part-circular former. A drawback of this approach is that contact between the pipe and the former does not extend along the whole length of the bend. Consequently, phenomena such as interference between ovalisation of the pipe and the former acting as a mandrel may not be sufficiently tested. Additionally, moving the former may not create sufficient tension in the pipe string to simulate the level of tension that is experienced during actual spooling.

DE 3044646 describes a machine for cold-bending a ninety-degree angle in a tube that may be used as part of a frame for a piece of camping furniture.

GB 764348 relates to manufacturing bent cast iron pipes by applying heat and a lateral force to a part of a pipe.

JP H06304666 describes progressively bending a double-walled tube by passing the tube over a rotating die.

Against this background, the invention resides in a bending rig for simultaneously bending and tensioning a pipe for testing purposes. The bending rig of the invention is representative both for bending conditions, in which contact with a former simulates a reel, and for tensioning conditions involving the additional application of tension. In a first aspect, the invention relates to a pipe-bending rig according to independent claim 1. The pipe-bending drive may act on the pipe directly or via a yoke attached to the pipe to effect said deflection of the distal end of the pipe. For example, the pipe-bending drive may comprise at least one pulling system arranged to deflect the distal end of the pipe toward the forming surface. The pulling system may comprise at least one wire that is pivotably coupled to the pipe or to a yoke attached to the pipe, for example via a swinging arm that is attached to the pipe or to the yoke.

In a simple arrangement, the carriage may be movable passively along the path by lateral force exerted by the deflected pipe on the carriage through the link. Alternatively, the carriage may be driven to reduce bending stress in the link. For example, the pipe-bending drive may also act directly on the carriage to move the carriage along the path substantially in angular alignment with the distal end of the pipe during said deflection. Another option is a separate carriage drive that is arranged to move the carriage along the path substantially in angular alignment with the distal end of the pipe during said deflection by the pipe-bending drive.

In another approach to deflecting the distal end of the pipe, a carriage drive that moves the carriage along the path may exert lateral force on the pipe through the link to double as the pipe-bending drive.

Preferably, the path is substantially parabolic to follow the path of the distal end of the pipe as the pipe is bent against a part-circular forming surface. The path is suitably defined by at least one curved rail along which the carriage can run, the curvature of the or each rail along its length being convex facing away from the anchorage. There may be a pair of parallel spaced rails between which, optionally, the link extends toward the pipe. Conveniently, a bending plane that contains the forming surface extends between the rails.

The link suitably comprises a jack or winch wire acting in tension between the carriage and the distal end of the pipe, and may also comprise the aforementioned yoke attached to a distal end of the pipe. The link may be pivotable relative to the carriage and/or the pipe to reduce bending stresses in the link.

In preferred embodiments, the rig of the invention also comprises at least one straightening former that presents a convex straightening surface opposed to the forming surface of the bending former. The straightening surface has a greater radius of curvature than the forming surface.

A secondary pipe-bending drive may be provided where a straightening former is used. Such a secondary pipe-bending drive is arranged to exert lateral force on the bent pipe to straighten the pipe along its length against the straightening surface.

Where a straightening former is used, the path preferably extends angularly between, and lies radially outboard of, distal ends of the forming surface and the straightening surface.

The invention also relates to a corresponding pipe-bending method according to independent claim 20. In preferred embodiments, the bending rig of the invention comprises a static circular former and a holding device for statically holding a fixed proximal end of the pipe at a first end of the former. Tensioning the pipe and bending the pipe under tension requires a movable distal end of the pipe to be guided to follow a realistic predefined path during bending, namely a substantially parabolic trajectory. Thus, one or more curved rails defines a path for the movable distal end of the pipe, between a start position corresponding to the initial straight unbent state of the pipe, and a bent position corresponding to a second end of the former opposed to the first end of the former. Preferred embodiments of the invention employ a trolley mounted on the rails. The distal end of the pipe is connected to the trolley via a jack that tensions the pipe during a bending test. Pulling means such as winches are connected to the distal end of the pipe or to the trolley for pulling the distal end along the predefined path to achieve bending of the pipe that is representative of spooling. This preferably parabolic path suitably corresponds to the curved shape of the rail.

Thus, the invention encompasses a method for simultaneously bending and tensioning a pipe during a bending test. That method comprises: connecting a first end of the pipe to a first end of a former; connecting an opposed second end of the pipe to a tensioning means, the tensioning means being integral with a trolley rolling on a rail that defines a pre-determined path for the trolley; connecting transverse pulling means to the second end of the pipe and/or the trolley; and simultaneously bending the pipe on the former by pulling the pipe transversely by the transverse pulling means and tensioning the pipe by the tensioning means until the pipe is fully bent on the former.

The tensioning means may, for example comprise a jack or a winch. Connection of the second end of the pipe to the tensioning means may be done by an interface piece such as a yoke, which may comprise a plug or cap that fits into or onto the pipe.
The transverse pulling means may be a winch whose wire is preferably connected to the second end of the pipe by a swinging arm that is pivotable relative to the pipe. Preferably, the former is static and has a part-circular shape. The rail preferably has a parabolic shape.

In order that the invention may be more readily understood, reference will now be made, by way of example, to the accompanying drawings in which:
Figure 1 is a perspective view from above of a bending rig in accordance with the invention, supporting a pipe shown here in a straight unbent state;
Figure 2 corresponds to Figure 1 but shows the pipe bent around a former that emulates a reel;
Figure 3 is a perspective view corresponding to Figure 1 but showing the rig from a free end of the pipe;
Figure 4 is a perspective view from underneath of the bending rig of Figure 3, similarly showing the rig from the free end of the pipe;
Figure 5 is an enlarged detail plan view of a trolley running on curved rails, supporting a tensioner jack acting on a yoke anchored to the free end of the pipe, those components being part of the bending rig shown in the preceding drawings;
Figure 6 is an enlarged detail perspective view of the rails, trolley, tensioner jack and yoke shown in Figure 5;
Figure 7 is an enlarged detail sectional view through the rails showing the relationship between the rails, the trolley and the tensioner jack of Figures 5 and 6;
Figure 8 is an enlarged detail end view of the bending rig of the invention, showing the trolley, the rails and the free end of the pipe; and
Figure 9 is a an enlarged detail plan view of a variant of the bending rig shown in Figures 1 to 8, showing the trolley being driven along the rails to drive deflection of the pipe or to follow deflection of the pipe driven by other means.

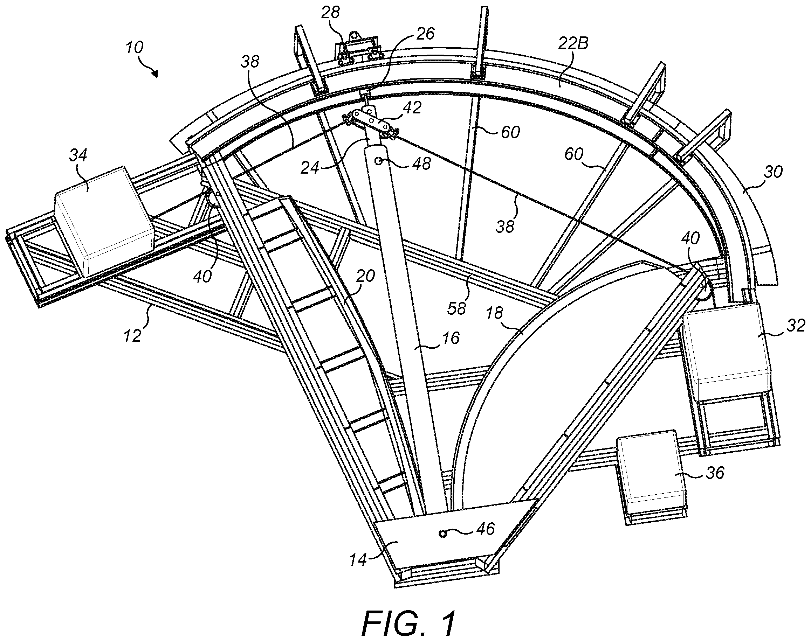

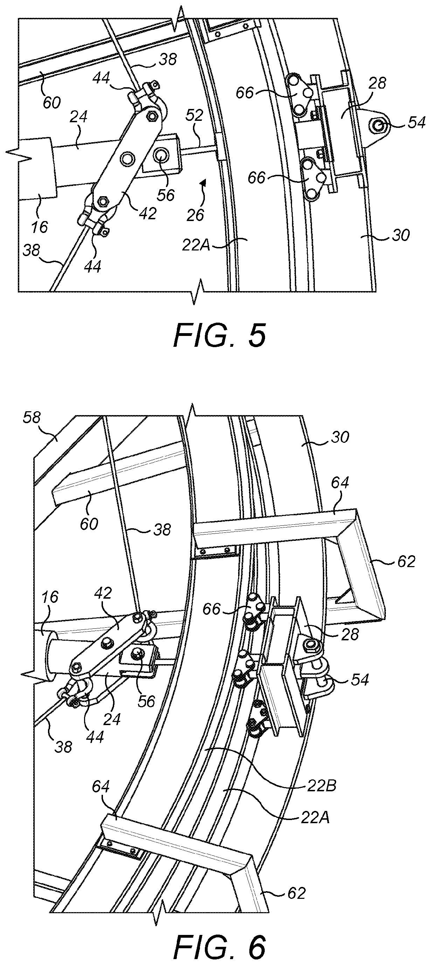

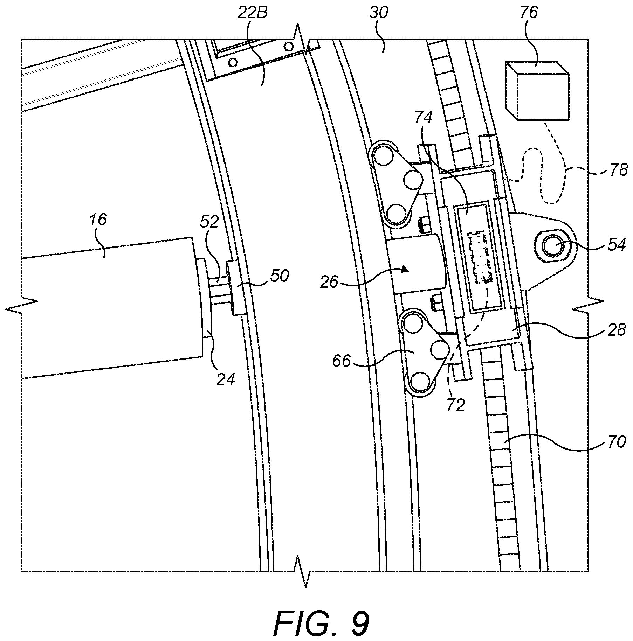

In summary, Figures 1 to 4 of the drawings show various overall views of an entire bending rig 10 in accordance with the invention, whereas Figures 5 to 8 show various enlarged detail views of specific components of the bending rig 10. Conversely, Figure 9 shows a variant of the bending rig shown in Figures 1 to 8.

Referring firstly to Figures 1 to 4, the bending rig 10 comprises a frame 12 that lies in a generally horizontal plane in use. The frame 12 supports the following major structural features:
an anchorage 14 for holding a fixed proximal end of a specimen pipe 16;
a fixed bending former 18 and a fixed straightening former 20 that are closely spaced at their proximal ends at the anchorage 14 to lie close to or in contact with the proximal end of the pipe 16, and that diverge from each other in a common bending plane as they extend distally from the anchorage 14; and
beams serving as rails 22A, 22B comprising a lower rail 22A and an upper rail 22B that lie outboard of the free distal end of the pipe 16 and are curved along their length to present a concave side toward the anchorage 14. The rails 22A, 22B lie in respective horizontal planes that are parallel to but spaced from each other, and each follow a substantially parabolic arc that extends angularly slightly beyond distal ends of the formers 18, 20. The bending plane extends through the gap between the rails 22A, 22B.

An interface structure exemplified here as a yoke 24 is attached to the pipe 16. The yoke 24 has a cylindrical body that fits telescopically within the distal end of the pipe 16. The yoke 24 protrudes from the distal end of the pipe 16 toward the rails 22A, 22B. As best seen in Figures 5 and 6, a tensioning link exemplified here as a tensioning jack 26 links the yoke 24 to a carriage exemplified here as a trolley 28. The tensioning jack 26 keeps the pipe 16 under longitudinal tension during bending by generating compressive reaction forces in the frame 12 between the anchorage 14 and the rails 22A, 22B via the trolley 28, the yoke 24 and the pipe 16.

The trolley 28 runs along the convex outer side of the rails 22A, 22B to remain aligned with the distal end of the pipe 16 as the pipe 16 is bent in a horizontal plane by the bending rig 10. The weight of the trolley 28 is supported by a horizontal track 30 that lies outboard of the rails 22A, 22B and extends along their convex outer side.

Outrigger members of the frame 12 support a pulling system that, in this example, is implemented by a bending winch 32, a straightening winch 34 and a hydraulic power unit 36. The hydraulic power unit 36 provides hydraulic power to the winches 32, 34 and to the tensioning jack 26.

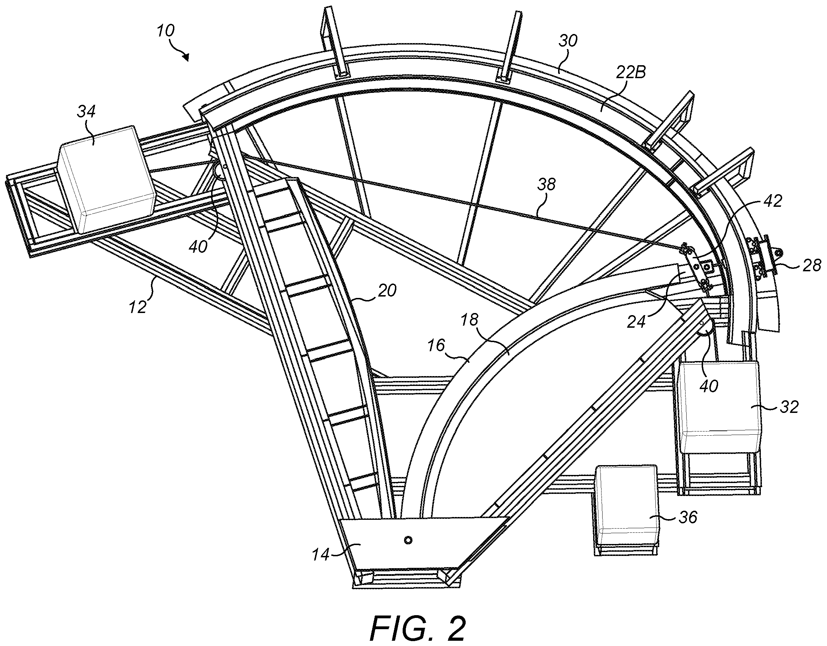

Figure 1 shows the pipe 16 in an initial neutral position, following a straight line in the bending plane that is substantially tangential to the proximal end of the bending former 18 beside the anchorage 14. When activated, the bending winch 32 pulls and bends the pipe 16 around the bending former 18 with plastic deformation as shown in Figure 2. Conversely, when activated instead, the straightening winch 34 pulls and straightens the plastically-bent pipe 16 - that is, the pipe 16 after bending around the bending former 18 - against the straightening former 20.

Respective wires 38 extend in the bending plane from the winches 32, 34 to the yoke 24 to pull the pipe 16 in opposing directions, hence selectively bending or straightening the pipe 16 as required. When one of the winches 32, 34 pulls a wire 36 to apply its tension to the yoke 24 and hence to apply a bending or straightening force to the distal end of the pipe 16, the other winch 32, 34 pays out its wire 36 to allow the pipe 16 to deflect in the appropriate direction.

The wires 38 run over respective pulley wheels 40 in the bending plane that turn about respective vertical axes at positions angularly outboard of the distal ends of the respective formers 18, 20. The wires 38 extend from the pulley wheels 40 and converge to a swinging arm 42 comprising parallel plates that embrace the yoke 24 and are pivotably mounted to the yoke 24 at a position distally outboard of the distal end of the pipe 16. As best seen in Figures 5 and 6, shackles 44 suitably attach the wires 38 to respective ends of the swinging arm 42. As a comparison between Figure 1 and Figure 2 makes clear, the swinging arm 42 pivots relative to the pipe 16 as appropriate to the changing geometry of the system, as dictated by progressive deflection of the pipe 16 in either direction from its neutral position shown in Figure 1.

The preferred position of the swinging arm 42 on which the pulling wires 38 act is on the yoke 24 near the distal end of the pipe 16 so that only the pipe 16 bends significantly and not the tensioning device exemplified here by the tensioning jack 26.

The bending former 18 presents a part-circular forming surface to the pipe 16. That forming surface extends around nearly 90° of arc, effectively to simulate the bending deformation experienced by a similar pipe during spooling onto a reel. The radius of curvature of the forming surface is similar to the bending radius of the reel being simulated.

In this example, the forming surface of the bending former 18 has a radius of curvature of 7.5 metres, being a little smaller than a typical reel of a pipelaying vessel. The straightening former 20 has much greater bending radius, being 27 metres in this example. Other formers 18, 20 with different bending radii may be chosen instead. For example, different bending formers 18 could be attached selectively to the frame to adapt the bending rig 10 for modelling different reel diameters.

The pipe 16 may be secured to the anchorage 14 in various ways. Here, a transverse pin 46 extends through the pipe 16 near its proximal end and into structural members of the anchorage 14. Similarly, the yoke 24 may be secured to the pipe 16 in various ways. Here, another transverse pin 48 extends through the part of the yoke 24 that fits telescopically into the distal end of the pipe and through the wall of pipe 16 near its distal end.

Figures 5 and 6 show that the tensioning jack 26 acting between the trolley 28 and the yoke 24 comprises a cylinder 50 and a rod 52. In this example, the cylinder 50 is pivotably connected to the trolley 28 via a vertical pin 54 on the trolley 28. Similarly, the rod 52 is pivotably connected to the yoke 24 via a vertical pin 56 extending through the yoke 24, between parallel bifurcated arms of the yoke 24 that embrace the rod 52.

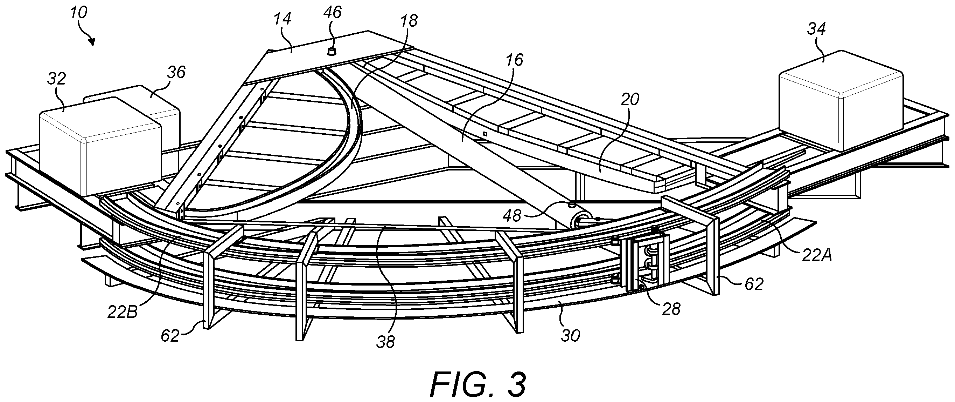

In conjunction with Figures 3 and 4, Figures 6, 7 and 8 show more clearly the relationship between the rails 22A, 22B and how the frame 12 supports those rails 22A, 22B. Figure 4 shows that the frame 12 comprises a horizontal cross-member 58 extending approximately between the ends of the rails 22A, 22B like a chord. Angularly-spaced struts 60 radiate from the cross-member 58 to intersect the rails 22A, 22B orthogonally.

Collectively, the struts 60 support a lower rail 22A and extend radially beyond the lower rail 22A to support the track 30. Outboard of the track 30, each strut 60 terminates in an inverted L-shaped support structure comprising an upright 62 extending orthogonally upwardly from the outer end of the strut 60 and an arm 64 extending orthogonally in a radially inward direction from the top of the upright 62. The arm 64 thus lies above the lower rail 22A, parallel to the strut 60. The arms 64 of the struts 60 together support an upper rail 22B.

The struts 60 extend beyond the lower rail 22A in a radially outward direction to define a gap between the upright 62 and the outer side of the rails 22A, 22B that is large enough to accommodate movement of the trolley 28 along the rails 22A, 22B.

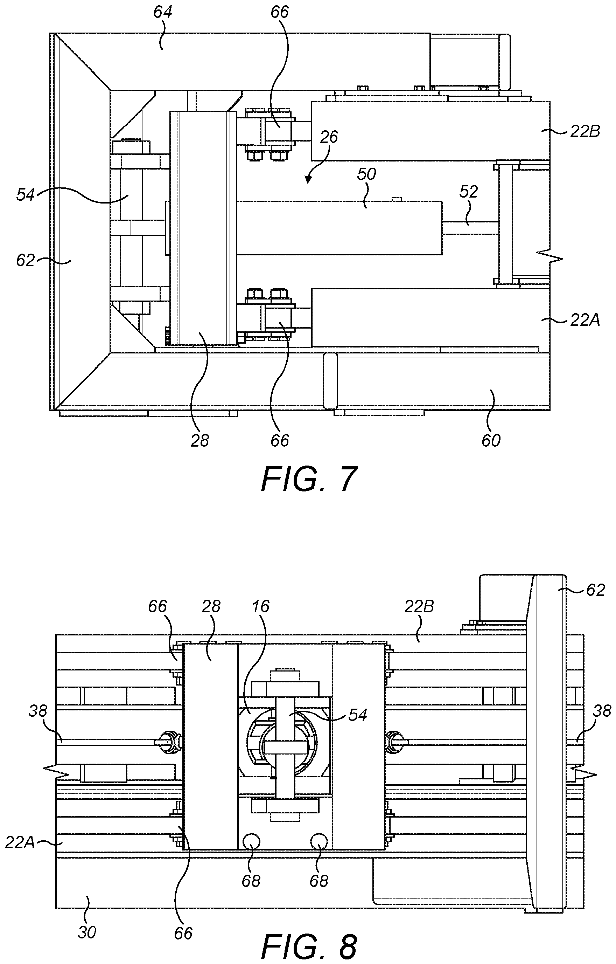

As best shown in Figures 7 and 8, the upper rail 22A is spaced from the lower rail 22B to accommodate the cylinder 50 of the tensioning jack 26. Figures 7 and 8 also show how the trolley 28 spans the gap between the rails 22A, 22B and comprises parallel wheel sets 66 that are aligned to run on the rails 22A, 22B. Additionally, Figure 8 shows rollers 68 on the underside of the trolley 28 that support the trolley 28 for rolling contact with the track 30.

Many variations are possible within the inventive concept. Some of these variations are shown in Figure 9 of the drawings, in which like numerals are used for like parts. However not all of these variations need be used in the same combination as shown in Figure 9.

In general, the objective of the pivot pins 54, 56 on the cylinder 50 and the rod 52 of the tensioning jack 26 as shown in Figures 1 to 8 is to avoid the rod 52 shearing in the event of significant misalignment between the trolley 28 and the distal end of the pipe 16. Ideally, however, the trolley 28 and the tensioning jack 26 and its rod 52 are always substantially aligned with the distal end of the pipe 16 and so that no pivoting is required. In that case, for example, the pivot pins 54, 56 on the cylinder 50 and the rod 52 of the tensioning jack 26 could be omitted.

By omitting the pivot pins 54, 56, Figure 9 exemplifies how the tensioning jack 26 could be connected rigidly to the trolley 28 and, via a yoke 24 or other interface structure, to the pipe 16. It will also be noted in Figure 9 that the rod 52 has been shortened and thickened to resist the resulting bending loads.

The necessity for pivoting mountings for the tensioning jack 26 may be determined by whether the movement of the trolley 28 is synchronised with deflection of the pipe 16. For example, the trolley 28 could be pulled by wires extending from the same winches 32, 34 or from other synchronised winches. More generally, it is possible to drive the trolley 28 directly in such a way as to synchronise its movement with the action of the winches 32, 34.

In this respect, Figure 9 shows that the trolley 28 could be driven by a drive mechanism that is exemplified here as comprising a toothed rack 70 extending along the track 30. The rack 70 is engaged with a pinion gear 72 on the underside of the trolley 28 that is driven by a motor/gearbox unit 74 also on the trolley 28. The motor/gearbox unit 74 is powered and controlled by a controller 76, shown here schematically, that is connected to the trolley 28 by a long flexible power and data cable 78. The controller 76 could be integrated with the hydraulic power unit 36 shown in Figures 1 to 4.

The drive mechanism shown in Figure 9 can drive the trolley 28 along the rails 22A, 22B. This may simply be used to synchronise movement of the trolley 28 with angular deflection of the distal end of the pipe 16 driven by other means, such as pulling wires 36 extending from winches 32, 34 as shown in Figures 1 to 8. However, if suitable measures are taken to resist bending loads, such as the shortened and thickened rod 52 shown in Figure 9, movement of the trolley 28 along the rails 22A, 22B can itself drive the desired angular deflection of the pipe 16 that is linked to the trolley 28 via the tensioning jack 26. In this respect, it will be noted that Figure 9 omits the pulling wires 36 extending from winches 32, 34. However, it remains possible that a pulling system that may comprise such wires and winches could be used in conjunction with the drive mechanism shown in Figure 9.

The swinging arm could be omitted or moved to the trolley so that the pulling wires of the winches act directly on the trolley to drive its movement along the rails. The trolley, in turn, can then apply bending forces to the distal end of the pipe via the tensioning jack or other tensioning device.

A tensioning jack is merely an example of a tensioning device that serves as a tensile link between the trolley and the pipe and acts against a reaction force through the anchorage. Other tensioning devices such as screw-thread mechanisms are possible, or indeed a winch wire acting radially outwardly between the trolley and the pipe. A winch wire has the advantage of compensating for misalignment between the trolley and the distal end of the pipe.

A tensioning device such as a tensioning jack may connected to the pipe in ways other than the pinned yoke as described. For example, a plug may be inflatable or expandable to be held in the free end of the pipe by friction. Also, a connection between the tensioning device and the pipe can instead be realised by a cap in an external locking system. A cap or plug may clamp to the pipe and/or engage with locking grooves or threads on the pipe.

Parabolic rails are preferred as they follow the path of the distal end of the pipe during bending around the bending former, but they are not essential in the broadest sense of the invention. The geometry of the system may instead be satisfied by changing the length of the tensile link between the trolley and the distal end of the pipe. That link is exemplified here by a tensioning jack, whose length is intrinsically variable and controllable.

It would be possible for the pulling wires to follow the profile of the curved rails to ensure that the bending force is always perpendicular to the axis of the pipe. Also the tensioning jack could be moved to the radially outer side of the rails to simplify the trolley attachment mechanism.

## Claims

1. A pipe-bending rig (10) comprising:
an anchorage (14) for holding a proximal end of a pipe (16);
at least one bending former (18) presenting a convex forming surface toward a side of a pipe (16) when the pipe (16) is held by the anchorage (14) to extend distally from the anchorage (14);
a pipe-bending drive (32) arranged to exert lateral force on the pipe (16) for deflecting a distal end of the pipe (16) to effect plastic bending of the pipe (16) along its length against the forming surface; at least one carriage (28) that is movable along a path with respect to the anchorage (14) and the bending former (18) during said deflection of the distal end of the pipe (16); and
a link (26) carried by the carriage (28) to extend toward the pipe (16), the link (26) being arranged to apply distal force to the pipe (16) to impart longitudinal tension to the pipe (16) as the pipe (16) is being bent against the forming surface,
**characterised in that** the at least one bending former (18) is fixed, and **in that** the convex forming surface of the bending former (18) extends along substantially the whole length of the pipe (16).

2. The rig (10) of Claim 1, wherein the pipe-bending drive (32) acts on the pipe (16) directly or via a yoke (24) attached to the pipe (16) to effect said deflection of the distal end of the pipe (16).

3. The rig (10) of Claim 2, wherein the carriage (28) is movable passively along the path by lateral force exerted by the deflected pipe (16) on the carriage (28) through the link (26).

4. The rig (10) of Claim 2, wherein the pipe-bending drive (32) also acts directly on the carriage (28) to move the carriage (28) along the path substantially in angular alignment with the distal end of the pipe (16) during said deflection.

5. The rig (10) of Claim 2, further comprising a carriage drive (74) acting on the carriage (28) that is arranged to move the carriage (28) along the path substantially in angular alignment with the distal end of the pipe (16) during said deflection by the pipe-bending drive (32).

6. The rig (10) of any preceding claim, wherein the pipe-bending drive (32) comprises at least one pulling system arranged to deflect the distal end of the pipe (16) toward the forming surface.

7. The rig (10) of Claim 6, wherein the pulling system comprises at least one wire (38) that is pivotably coupled to the pipe (16) or to a yoke (24) attached to the pipe (16).

8. The rig (10) of Claim 7, wherein pivotable coupling of the wire (38) is effected via a swinging arm (42) attached to the pipe (16) or to the yoke (24).

9. The rig (10) of Claim 1, wherein a carriage drive (74) acting on the carriage (28) to move the carriage (28) along the path is arranged to exert lateral force on the pipe (16) through the link (26) to serve as the pipe-bending drive.

10. The rig (10) of any preceding Claim, wherein the path is defined by at least one curved rail along which the carriage (28) can run, the curvature of the or each rail along its length being convex facing away from the anchorage (14).

11. The rig (10) of Claim 10, wherein the carriage (28) runs on a pair of parallel spaced rails (22A, 22B) between which the link (26) extends toward the pipe (16).

12. The rig (10) of Claim 11, wherein a bending plane containing the forming surface extends between the rails (22A, 22B).

13. The rig (10) of any preceding claim, wherein the path is substantially parabolic.

14. The rig (10) of any preceding claim, wherein the link (26) comprises a jack acting in tension between the carriage (28) and the distal end of the pipe (16).

15. The rig (10) of any preceding claim, wherein the link (26) comprises a yoke (24) attached to a distal end of the pipe (16).

16. The rig (10) of any preceding claim, wherein the link (26) is pivotable relative to the carriage (28) and/or the pipe (16).

17. The rig (10) of any preceding claim, further comprising at least one straightening former (20) presenting a convex straightening surface that is opposed to the forming surface of the bending former (18) and has a greater radius of curvature than the forming surface.

18. The rig (10) of Claim 17, further comprising a secondary pipe-bending drive (34) arranged to exert lateral force on the bent pipe (16) to straighten the pipe (16) along its length against the straightening surface.

19. The rig (10) of Claim 17 or Claim 18, wherein the path extends angularly between, and lies radially outboard of, distal ends of the forming surface and the straightening surface.

20. A pipe-bending method comprising:
holding a proximal end of a pipe (16);
deflecting a distal end of the pipe (16) laterally to bend the pipe (16) plastically along its length around a convex forming surface of a fixed bending former (18) such that the convex forming surface extends along substantially the whole length of the pipe (16);
moving a carriage (28) along a path during said deflection; and
applying distal force between the carriage (28) and the distal end of the pipe (16) to impart longitudinal tension to the pipe (16) during said deflection.

21. The method of Claim 20, comprising maintaining substantial angular alignment between the carriage (28) and the distal end of the pipe (16) during said deflection.

22. The method of Claim 21, comprising driving movement of the carriage (28) along the path in synchronisation with deflection of the distal end of the pipe (16).

23. The method of any of Claims 20 to 22, comprising moving the carriage (28) by virtue of lateral force exerted to deflect the distal end of the pipe (16), which lateral force is transmitted to the carriage (28).

24. The method of Claim 20 or Claim 21, comprising driving movement of the carriage (28) along the path to deflect the distal end of the pipe (16) by transmitting lateral force to the pipe (16) from the carriage (28).

## Patentansprüche

1. Rohrbiegevorrichtung (10), umfassend:
eine Verankerung (14) zum Halten eines proximalen Endes eines Rohres (16);
mindestens einen Biegeformer (18), der eine konvexe Formungsfläche zu einer Seite eines Rohres (16) hin aufweist, wenn das Rohr (16) von der Verankerung (14) gehalten wird, um sich distal von der Verankerung (14) zu erstrecken;
einen Rohrbiegeantrieb (32), der so angeordnet ist, dass er eine seitliche Kraft auf das Rohr (16) ausübt, um ein distales Ende des Rohres (16) auszulenken, um eine plastische Biegung des Rohres (16) entlang seiner Länge gegen die Formungsfläche zu bewirken;
mindestens einen Schlitten (28), der während der Auslenkung des distalen Endes des Rohres (16) entlang eines Weges in Bezug auf die Verankerung (14) und den Biegeformer (18) bewegbar ist; und
ein Verbindungsglied (26), das vom Schlitten (28) gehalten wird, um sich in Richtung auf das Rohr (16) zu erstrecken, wobei das Verbindungsglied (26) dazu angeordnet ist, eine distale Kraft auf das Rohr (16) auszuüben, um dem Rohr (16) eine Längsspannung zu verleihen, während das Rohr (16) gegen die Formungsfläche gebogen wird,
**dadurch gekennzeichnet, dass** der mindestens eine Biegeformer (18) fixiert ist und dass sich die konvexe Formungsfläche des Biegeformers (18) im Wesentlichen über die gesamte Länge des Rohres (16) erstreckt.

2. Vorrichtung (10) nach Anspruch 1, wobei der Rohrbiegeantrieb (32) direkt oder über ein an dem Rohr (16) befestigtes Joch (24) auf das Rohr (16) einwirkt, um die Auslenkung des distalen Endes des Rohres (16) zu bewirken.

3. Vorrichtung (10) nach Anspruch 2, wobei der Schlitten (28) durch eine seitliche Kraft, die durch das ausgelenkte Rohr (16) über das Verbindungsglied (26) auf den Schlitten (28) ausgeübt wird, passiv entlang der Bahn bewegbar ist.

4. Vorrichtung (10) nach Anspruch 2, wobei der Rohrbiegeantrieb (32) auch direkt auf den Schlitten (28) einwirkt, um den Schlitten (28) während der Auslenkung entlang des Weges im Wesentlichen in Winkelausrichtung zum distalen Ende des Rohres (16) zu bewegen.

5. Vorrichtung (10) nach Anspruch 2, die ferner einen auf den Schlitten (28) einwirkenden Schlittenantrieb (74) umfasst, der so angeordnet ist, dass er den Schlitten (28) während der Auslenkung durch den Rohrbiegeantrieb (32) entlang des Weges im Wesentlichen in Winkelausrichtung zum distalen Ende des Rohres (16) bewegt.

6. Vorrichtung (10) nach einem vorhergehenden Anspruch, wobei der Rohrbiegeantrieb (32) mindestens ein Zugsystem umfasst, das so angeordnet ist, dass es das distale Ende des Rohrs (16) in Richtung der Formungsfläche auslenkt.

7. Vorrichtung (10) nach Anspruch 6, wobei das Zugsystem mindestens einen Draht (38) umfasst, der schwenkbar mit dem Rohr (16) oder einem an dem Rohr (16) befestigten Joch (24) gekoppelt ist.

8. Vorrichtung (10) nach Anspruch 7, wobei die schwenkbare Kopplung des Drahtes (38) über einen am Rohr (16) oder am Joch (24) befestigten Schwenkarm (42) bewirkt wird.

9. Vorrichtung (10) nach Anspruch 1, wobei ein Schlittenantrieb (74), der auf den Schlitten (28) einwirkt, um den Schlitten (28) entlang des Weges zu bewegen, so angeordnet ist, dass er über das Verbindungsglied (26) eine seitliche Kraft auf das Rohr (16) ausübt, um als Rohrbiegeantrieb zu dienen.

10. Vorrichtung (10) nach einem vorhergehenden Anspruch, wobei der Weg durch mindestens eine gekrümmte Schiene definiert ist, entlang derer der Schlitten (28) laufen kann, wobei die Krümmung der oder jeder Schiene entlang ihrer Länge konvex von der Verankerung (14) abgewandt ist.

11. Vorrichtung (10) nach Anspruch 10, wobei der Schlitten (28) auf einem Paar paralleler, beabstandeter Schienen (22A, 22B) läuft, zwischen denen sich das Verbindungsglied (26) zum Rohr (16) hin erstreckt.

12. Vorrichtung (10) nach Anspruch 11, wobei sich zwischen den Schienen (22A, 22B) eine die Formungsfläche enthaltende Biegeebene erstreckt.

13. Vorrichtung (10) nach einem vorhergehenden Anspruch, wobei der Weg im Wesentlichen parabolisch ist.

14. Vorrichtung (10) nach einem vorhergehenden Anspruch, wobei das Verbindungsglied (26) eine Hubvorrichtung umfasst, die unter Spannung zwischen dem Schlitten (28) und dem distalen Ende des Rohrs (16) wirksam ist.

15. Vorrichtung (10) nach einem der vorhergehenden Ansprüche, wobei das Verbindungsglied (26) ein Joch (24) umfasst, das an einem distalen Ende des Rohrs (16) befestigt ist.

16. Vorrichtung (10) nach einem vorhergehenden Anspruch, wobei das Verbindungsglied (26) relativ zum Schlitten (28) und/oder zum Rohr (16) schwenkbar ist.

17. Vorrichtung (10) nach einem vorhergehenden Anspruch, die ferner mindestens einen Richtformer (20) umfasst, der eine konvexe Richtfläche aufweist, die der Formungsfläche des Biegeformers (18) gegenüberliegt und einen größeren Krümmungsradius als die Formungsfläche aufweist.

18. Vorrichtung (10) nach Anspruch 17, die ferner einen sekundären Rohrbiegeantrieb (34) umfasst, der so angeordnet ist, dass er eine seitliche Kraft auf das gebogene Rohr (16) ausübt, um das Rohr (16) entlang seiner Länge gegen die Richtfläche zu richten.

19. Vorrichtung (10) nach Anspruch 17 oder 18, wobei der Weg sich winklig zwischen den distalen Enden der Formungsfläche und der Richtfläche erstreckt und radial außerhalb derselben liegt.

20. Rohrbiegeverfahren, umfassend:
Halten eines proximalen Endes eines Rohres (16);
seitliches Auslenken eines distalen Endes des Rohres (16), um das Rohr (16) plastisch entlang seiner Länge um eine konvexe Formungsfläche eines fixierten Biegeformers (18) auszulenken, so dass sich die konvexe Formungsfläche im Wesentlichen über die gesamte Länge des Rohres (16) erstreckt;
Bewegen eines Schlittens (28) entlang eines Weges während der Auslenkung; und
Aufbringen einer distalen Kraft zwischen dem Schlitten (28) und dem distalen Ende des Rohres (16), um dem Rohr (16) während der Auslenkung eine Längsspannung zu verleihen.

21. Verfahren nach Anspruch 20, das das Aufrechterhalten einer im Wesentlichen abgewinkelten Ausrichtung zwischen dem Schlitten (28) und dem distalen Ende des Rohres (16) während der Auslenkung umfasst.

22. Verfahren nach Anspruch 21, das die Antriebsbewegung des Schlittens (28) entlang des Weges in synchroner Abstimmung mit der Auslenkung des distalen Endes des Rohrs (16) umfasst.

23. Verfahren nach einem der Ansprüche 20 bis 22, die das Bewegen des Schlittens (28) mittels einer seitlichen Kraft umfasst, die ausgeübt wird, um das distale Ende des Rohrs (16) auszulenken, wobei die seitliche Kraft auf den Schlitten (28) übertragen wird.

24. Verfahren nach Anspruch 20 oder Anspruch 21, die eine Antriebsbewegung des Schlittens (28) entlang des Weges umfasst, um das distale Ende des Rohrs (16) mittels Übertragung einer seitlichen Kraft auf das Rohr (16) vom Schlitten (28) auszulenken.

## Revendications

1. Matériel de cintrage de tuyau (10) comprenant :
un ancrage (14) permettant de maintenir une extrémité proximale d'un tuyau (16) ;
au moins un dispositif de formation de cintrage (18) présentant une surface de formation convexe vers un côté d'un tuyau (16) lorsque le tuyau (16) est maintenu par l'ancrage (14) pour s'étendre distalement depuis l'ancrage (14) ;
un entraînement de cintrage de tuyau (32) agencé pour exercer une force latérale sur le tuyau (16) pour défléchir une extrémité distale du tuyau (16) afin d'effectuer un cintrage plastique du tuyau (16) suivant sa longueur contre la surface de formation ;
au moins un chariot (28) qui est mobile le long d'une trajectoire par rapport à l'ancrage (14) et au dispositif de formation de cintrage (18) pendant ladite déflexion de l'extrémité distale du tuyau (16) ; et
une liaison (26) portée par le chariot (28) pour s'étendre vers le tuyau (16), la liaison (26) étant agencée pour appliquer une force distale au tuyau (16) pour communiquer une tension longitudinale au tuyau (16) lorsque le tuyau (16) est en cours de cintrage contre la surface de formation,
**caractérisé en ce que** l'au moins un dispositif de formation de cintrage (18) est fixe, et **en ce que** la surface de formation convexe du dispositif de formation de cintrage (18) s'étend suivant sensiblement toute la longueur du tuyau (16).

2. Matériel (10) selon la revendication 1, dans lequel l'entraînement de cintrage de tuyau (32) agit sur le tuyau (16) directement ou via un étrier (24) attaché au tuyau (16) pour effectuer ladite déflexion de l'extrémité distale du tuyau (16).

3. Matériel (10) selon la revendication 2, dans lequel le chariot (28) est mobile passivement le long de la trajectoire par une force latérale exercée par le tuyau (16) défléchi sur le chariot (28) par le biais de la liaison (26).

4. Matériel (10) selon la revendication 2, dans lequel l'entraînement de cintrage de tuyau (32) agit également directement sur le chariot (28) pour déplacer le chariot (28) le long de la trajectoire sensiblement en alignement angulaire avec l'extrémité distale du tuyau (16) pendant ladite déflexion.

5. Matériel (10) selon la revendication 2, comprenant en outre un entraînement de chariot (74) agissant sur le chariot (28), qui est agencé pour déplacer le chariot (28) le long de la trajectoire, sensiblement en alignement angulaire avec l'extrémité distale du tuyau (16) pendant ladite déflexion par l'entraînement de cintrage de tuyau (32).

6. Matériel (10) selon l'une quelconque des revendications précédentes, dans lequel l'entraînement de cintrage de tuyau (32) comprend au moins un système de traction agencé pour défléchir l'extrémité distale du tuyau (16) vers la surface de formation.

7. Matériel (10) selon la revendication 6, dans lequel le système de traction comprend au moins un câble (38) qui est accouplé en pivotement au tuyau (16) ou à un étrier (24) attaché au tuyau (16).

8. Matériel (10) selon la revendication 7, dans lequel l'accouplement pivotant du câble (38) s'effectue par le biais d'un bras oscillant (42) attaché au tuyau (16) ou à l'étrier (24).

9. Matériel (10) selon la revendication 1, dans lequel un entraînement de chariot (74) agissant sur le chariot (28) pour déplacer le chariot (28) le long de la trajectoire est agencé pour exercer une force latérale sur le tuyau (16) par le biais de la liaison (26) pour servir d'entraînement de cintrage de tuyau.

10. Matériel (10) selon l'une quelconque des revendications précédentes, dans lequel la trajectoire est définie par au moins un rail incurvé le long duquel le chariot (28) peut circuler, la courbure du ou de chaque rail suivant sa longueur étant convexe, orientée à l'opposé de l'ancrage (14).

11. Matériel (10) selon la revendication 10, dans lequel le chariot (28) circule sur une paire de rails espacés parallèles (22A, 22B) entre lesquels la liaison (26) s'étend vers le tuyau (16).

12. Matériel (10) selon la revendication 11, dans lequel un plan de cintrage contenant la surface de formation s'étend entre les rails (22A, 22B).

13. Matériel (10) selon l'une quelconque des revendications précédentes, dans lequel la trajectoire est sensiblement parabolique.

14. Matériel (10) selon l'une quelconque des revendications précédentes, dans lequel la liaison (26) comprend un vérin agissant en tension entre le chariot (28) et l'extrémité distale du tuyau (16).

15. Matériel (10) selon l'une quelconque des revendications précédentes, dans lequel la liaison (26) comprend un étrier (24) attaché à une extrémité distale du tuyau (16).

16. Matériel (10) selon l'une quelconque des revendications précédentes, dans lequel la liaison (26) est pivotante par rapport au chariot (28) et/ou au tuyau (16).

17. Matériel (10) selon l'une quelconque des revendications précédentes, comprenant en outre au moins un dispositif de formation de redressage (20) présentant une surface de redressage convexe qui est opposée à la surface de formation du dispositif de formation de cintrage (18) et qui a un rayon de courbure plus grand que la surface de formation.

18. Matériel (10) selon la revendication 17, comprenant en outre un entraînement secondaire de cintrage (34) de tuyau agencé pour exercer une force latérale sur le tuyau cintré (16) pour redresser le tuyau (16) suivant sa longueur contre la surface de redressage.

19. Matériel (10) selon la revendication 17 ou la revendication 18, dans lequel la trajectoire s'étend de façon angulaire entre les extrémités distales de la surface de formation et de la surface de redressement, et se trouve radialement à l'extérieur de celles-ci.

20. Procédé de cintrage de tuyau comprenant :
le maintien d'une extrémité proximale d'un tuyau (16) ;
la déflexion d'une extrémité distale du tuyau (16) latéralement pour cintrer le tuyau (16) plastiquement suivant sa longueur autour d'une surface de formation convexe d'un dispositif de formation de cintrage fixe (18) de sorte que la surface de formation convexe s'étende suivant sensiblement toute la longueur du tuyau (16) ;
le déplacement d'un chariot (28) le long d'une trajectoire durant ladite déflexion ; et
l'application d'une force distale entre le chariot (28) et l'extrémité distale du tuyau (16) pour communiquer une tension longitudinale au tuyau (16) pendant ladite déflexion.

21. Procédé selon la revendication 20, comprenant le maintien d'un alignement sensiblement angulaire entre le chariot (28) et l'extrémité distale du tuyau (16) pendant ladite déflexion.

22. Procédé selon la revendication 21, comprenant l'entraînement du mouvement du chariot (28) le long de la trajectoire en synchronisation avec la déflexion de l'extrémité distale du tuyau (16).

23. Procédé selon l'une quelconque des revendications 20 à 22, comprenant le déplacement du chariot (28) grâce à une force latérale exercée pour défléchir l'extrémité distale du tuyau (16), laquelle force latérale est transmise au chariot (28).

24. Procédé selon la revendication 20 ou la revendication 21, comprenant l'entraînement d'un déplacement du chariot (28) le long de la trajectoire pour défléchir l'extrémité distale du tuyau (16) par transmission d'une force latérale au tuyau (16) depuis le chariot (28).
